# EUROPÄISCHE PATENTSCHRIFT

(11) **EP 0 463 494 B1**
(45) Veröffentlichungstag und Bekanntmachung des Hinweises auf die Patenterteilung: **06.05.1999**
(21) Anmeldenummer: 91109716.0
(22) Anmeldetag: 13.06.1991
(51) Int. Cl.: C08G 63/00, C08G 77/42, C08G 63/79, C08G 63/64, C08G 64/18

(54) **Interpolymerisate aus aromatischen Polyestern und Kautschuken**
Interpolymers from aromatic polyesters and rubbers
Copolymères de polyesters aromatiques et de caoutchoucs

(30) Priorität: 26.06.1990 DE 4020256
(43) Veröffentlichungstag der Anmeldung: 02.01.1992
(73) Patentinhaber: BAYER AG, 51368 Leverkusen (DE)
(72) Erfinder: Lütjens, Holger, Dr., W-5000 Köln 80 (DE); Westeppe, Uwe, Dr., W-4020 Mettmann (DE); Morbitzer, Leo, Dr., W-5000 Köln 80 (DE); Piejko, Karl-Erwin, Dr., W-5060 Bergisch Gladbach 2 (DE); Lindner, Christian, Dr., W-5000 Köln 80 (DE)

(56) Entgegenhaltungen:
- EP-A- 0 175 161
- EP-A- 0 312 872
- EP-A- 0 331 312
- FR-A- 1 187 648
- FR-A- 2 378 055
- US-A- 4 386 186

## Beschreibung

Gegenstand der Erfindung sind Interpolymerisate aus aromatischen Polyestern und vernetzten Kautschuken sowie ein Verfahren zu ihrer Herstellung. Mit Interpolymerisat wird im folgenden ein Produkt bezeichnet, das einen aromatischen Polyester und einen vernetzten Kautschuk enthält und in welchem beide Bestandteile chemisch miteinander verbunden sind. Typische Interpolymerisate in diesem Sinn sind Blockcopolymerisate und Pfropfcopolymerisate.

Das Verfahren zur Herstellung der Interpolymerisate besteht im Prinzip daraus, daß man ein Gemisch eines reaktive Gruppen enthaltenden vernetzten Kautschuks in Latexform und einer wäßrigen Lösung eines Alkali- oder Erdalkalidiphenolats mit einer Lösung eines Dicarbonsäurehalogenids und/oder eines Carbonylhalogenids in einem mit Wasser nicht mischbaren Lösungsmittel umsetzt, wobei sich an der Phasengrenze Wasser/organisches Lösungsmittel ein aromatischer Polyester bildet, der in die organische Phase übergeht. Gleichzeitig geht auch der Kautschuk aus der wäßrigen in die organische Phase über. Wird dann die organische Phase abgetrennt und das organische Lösungsmittel entfernt, dann bleibt ein Interpolymerisat von Kautschuk und organischem Polyester zurück. Dieses ist geeignet zur Herstellung von Formkörpern aller Art mit den Methoden der thermoplastischen Formgebung wie Extrusion und Spritzguß. Er besitzt verbesserte Elastizität und Bruchdehnung, gute Oberflächeneigenschaften wie Glanz, Stippenfreiheit, Gleichmäßigkeit und eine besonders helle Farbe.

Die für das erfindungsgemäße Verfahren geeigneten Kautschuke liegen in Form ihrer Latices vor. Sie sind vernetzt und besitzen Erweichungstemperaturen unter 0°C. Diese Kautschuke und ihre Latices sind bekannt. Besonders geeignet sind Dienkautschuke, insbesondere Polymerisate von Butadien, Isopren, Chloropren mit gegebenenfalls bis zu 30 Gew.-% eines Comonomeren wie Styrol, Acrylnitril, Alkylacrylat, Vinylether und Acrylatkautschuke, insbesondere Polymerisate von Alkylacrylaten mit gegebenenfalls bis zu 50 Gew.-% Comonomeren wie Butadien, Alkylmethacrylat, Vinylacetat, Styrol, Vinyl, Alkylether, Acrylnitril, sowie Olefinkautschuke, insbesondere aus Ethylen mit Comonomeren wie Vinylacetat, Alkylacrylat, Kohlenmonoxid, Propylen, Isobutylen und ferner Siliconkautschuke, insbesondere aus Struktureinheiten der allgemeinen Formel

RₙSiO_{4-n/2},

worin R ein einwertiger Kohlenwasserstoffrest, z.B. C₁-C₁₈-Alkyl oder C₆-C₁₀-Aryl ist und n einen Durchschnittswert von 1 bis weniger als 3 besitzt.

Die Kautschuke liegen, wie gesagt, als Latices vor, die mittleren Teilchendurchmesser (d₅₀) in den Latices sind 0,05 bis 1,5, insbesondere 0,07 bis 0,5 µm. Die Gelgehalte als Maß für die Vernetzung sind >85 Gew.-%.

Die Kautschuke müssen reaktive Gruppen enthalten, die mit den aromatischen Polyestern bei deren Bildung reagieren können. Solche Gruppen, im folgenden mit X bezeichnet, sind z.B. -OH. -CH₂Hal (Hal = Halogen, z.B. Chlor, Brom) 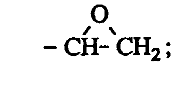 -COOH; -CO-Hal (Hal = Halogen, z.B. Chlor, Brom).

Die Menge der Struktureinheiten, enthaltend Reaktivgruppen X, im Kautschuk beträgt 1 bis 10 Mol-% der gesamten Struktureinheiten des Kautschuks. Die Reaktivgruppen X werden beispielsweise durch Copolymerisation von Monomeren wie Hydroxyethylmethacrylat, Hydroxyethylacrylat, p-Isopropenylphenol, 2-(Hydroxyphenyl)-2-(p-isopropenylphenyl)-propan, Chlormethylstyrol, Glycidylmethacrylat, Methacrylsäure, Acrylsäure mit den, den Kautschuk bildenden Monomeren oder durch Pfropfpolymerisation von Monomeren, enthaltend die Reaktivgruppen X, auf den fertigen Kautschuk eingeführt. Die Reaktivgruppen X können auch durch polymeranaloge Reaktionen an Kautschuken mit copolymerisierten Struktureinheiten, die Reaktivgruppen Y enthalten, vor oder während der Polykondensation erzeugt werden. Geeignete Reaktivgruppen Y (die wenigstens zu einem Anteil in Reaktivgruppen X überführt werden können) sind verkappte Phenolgruppen wie Phenolester der Struktur 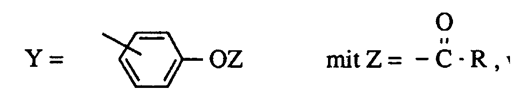 worin R=C₁-C₄-Alkyl, oder Trialkylsilanderivate der Struktur 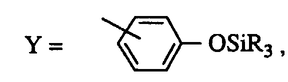 worin R = C₁-C₄-Alkyl, die im alkalischen oder sauren Milieu wenigstens teilweise unter Bildung der Phenolgruppe gespalten werden. Die Menge der copolymerisierten und/oder aufgepfropften Struktureinheiten mit Reaktivgruppen Y beträgt 1 Mol-% bis 10 Mol-% der gesamten Struktureinheiten des Kautschuks.

Reaktivgruppen Y werden beispielsweise durch Copolymerisation von Monomeren wie p-Isopropenylphenylacetat, p-Acetoxystyrol, Trimethyl-(4-isopropenylphenoxy)-silan mit den, den Kautschuk aufbauenden Monomeren oder durch Pfropfpolymerisation von Monomeren mit Reaktivguppen Y, auf den Kautschuk eingeführt.

Besonders bevorzugt sind Acrylatkautschuke, die vorzugsweise durch radikalische Emulsionspolymerisation erhalten worden sind. Hier handelt es sich um vernetzte, teilchenförmige Emulsionspolymerisate von C₁-C₈-Alkylacrylaten, insbesondere C₂-C₈-Alkylacrylaten, gegebenenfalls in Mischung mit bis zu 30 Gew.-% eines Comonomeren wie Styrol, Methylmethacrylat, Butadien, Vinylmethylether, Acrylnitril und wenigstens einem polyfunktionellen vernetzendem Comonomer, wie Divinylbenzol, Glykolbisacrylat, Butandiolbisacrylate, Bisacrylamid, Phosphorsäuretriallylester, Allylester der Acrylsäure, Allylester der Methacrylsäure, Triallylcyanurat, Triallylisocyanurat in Mengen bis zu 4 Gew.-%, bezogen auf die gesamten Monomeren. Daneben enthalten die Kautschuke die Reaktivgruppen X, und/oder Y, die vorzugsweise durch Einbau im Hydroxyethylacrylat, Hydroxyethylmethacrylat oder p-Isopropenylphenylacetat erzeugt werden.

Auch Kautschuke mit Kern/Mantel-Struktur, wie beispielsweise in DE-A-32 00 070 und DE-A-37 04 657 beschrieben, können verwendet werden.

Den aromatischen Polyestern - der Begriff schließt erfindungsgemäß aromatische Polyester, aromatische Polycarbonate und aromatische Polyestercarbonate ein -, die im Rahmen der Erfindung hergestellt werden, liegen Diphenole der Formel (I) zugrunde 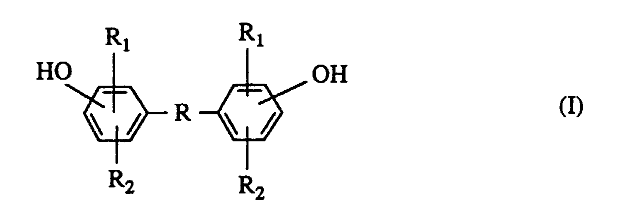 mit R₁, R₂ = H, C₁-C₄-Alkyl, Halogen, bevorzugt H, CH₃, Cl, Br,
- R =: Einfachbindung, C₁-C₁₂-Alkylen,C₅-C₂₀-Cycloalkylen, Arylen, bevorzugt -CH₂-, -C₂H₄-, -C₃H₆-, -S-, 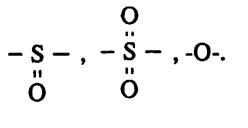
Geeignete Diphenole der Formel (I) sind beispielsweise Hydrochinon, Resorcin, 4,4-Dihydroxyphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-3,3,5-trimethylcyclohexan. Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan, 1,1-Bis-(4-hydroxyphenyl)-3,3,5-trimethyl-cyclohexan, (DE-OS 3 832 396), besonders bevorzugt 2,2-Bis-(4-hydroxyphenyl)-propan.

Zur Bildung von aromatischen Polycarbonaten werden diese Diphenole mit Carbonylhalogeniden wie Carbonylbromid, Phosgen oder dessen Gemischen, oder mit Bischlorformiaten von 2,2-Bis-(4-hydroxyphenyl)-propan; 2,2-Bis-(4-hydroxy-3,5-dichlorphenyl)-propan oder Hydrochinon umgesetzt.

Zur Herstellung von aromatischen Polyestern verwendet man zur Umsetzung Dicarbonsäurehalogenide, beispielsweise Oxalylchlorid, Succinylchlorid, Fumarylchlorid, Glutarylchlorid, Adipylchlorid, Pimelylchlorid, Suberylchlorid, Azelaylchlorid, Sebacylchlorid, Phthaloylchlorid, Isophthaloylchlorid, Terephthaloylchlorid. Bevorzugt sind Terephthaloylchlorid, Isophthaloylchlorid und deren Gemische, wobei das Verhältnis der Isophthaloylreste zu den Terephthaloylresten vorzugsweise 3:7 bis 7:3, insbesondere 4,5:5,5 bis 5,5:4,5, ist.

Zur Herstellung von Polyestercarbonaten verwendet man ein Gemisch aus Carbonylhalogenid und Dicarbonsäurehalogenid in einer solchen Menge, daß sich, bezogen auf die Summe von Ester und Carbonatgruppierungen bis zu 90, vorzugsweise bis zu 45 Mol-% Carbonatgruppierungen bilden.

Das erfindungsgemäße Verfahren selbst kann nach den bekannten Regeln der Phasengrenzflächenpolykondensation ausgeführt werden, wie sie z.B. in Chemistry and Physics of Polycarbonates, Polymer Reviews, Bd. IX, Seiten 33 ff., Interscience Publishers (1964) beschrieben sind.

Erfindungsgemäß werden Alkali- oder Erdalkalisalze der Diphenole der Formel (I) als wäßrige Lösungen in Gegenwart wäßriger Kautschuklatices, mit reaktiven Gruppen X und/oder Y, mit Dicarbonsäurehalogeniden und/oder Carbonylhalogeniden in mit Wasser nicht mischbaren inerten, organischen Lösungsmitteln unter Bildung der erfindungsgemäßen Interpolymerisate umgesetzt. Das erfindungsgemäße Verfahren kann beispielsweise wie folgt ausgeführt werden: Der wäßrige Latex eines vernetzten Kautschuks wird mit einer wäßrigen Lösung eines Salzes des Diphenols der Formel (I) bei 0 bis 50°C, bevorzugt 10 bis 25°C, vermischt. Die Kautschuklatices besitzen vorzugsweise einen Feststoffgehalt von 10 bis 50 Gew.-%, insbesondere 15 bis 40 Gew.-%. Die wäßrige Diphenolatlösung kann z.B. durch Lösen des Diphenols der Formel (I) in einer wäßrigen Alkalihydroxidlösung, vorzugsweise Natronlauge, hergestellt werden. Bevorzugtes Diphenol der Formel (I) ist 2,2-Bis-(4-hydroxyphenyl)-propan. Dann wird unter Durchmischung ein mit Wasser nicht mischbares inertes organisches Lösungsmittel, vorzugsweise Methylenchlorid und/oder Chlorbenzol, das gegebenenfalls Phasentransferkatalysatoren, z.B. quartäre Ammoniumverbindungen gelöst enthält, in etwa der 20 bis 80-fachen Gewichtsmenge des Kautschuks im Latex zugegeben. In diese stark gerührte Mischung wird dann das Dicarbonsäurehalogenid, Carbonylhalogenid oder beide gleichzeitig gegeben bei 0 bis 50°C, vorzugsweise 10 bis 25°C, innerhalb eines Zeitraumes von 5 Minuten bis 5 Stunden, vorzugsweise 5 Minuten bis 2 Stunden. Bevorzugte Dicarbonsäurehalogenide sind Terephthaloylchlorid und Isophthaloylchlorid sowie deren Gemische, bevorzugtes Carbonylhalogenid ist Phosgen.

Man kann auch zunächst den wäßrigen Kautschuklatex mit dem inerten organischen Lösungsmittel, das gegebenenfalls Phasentransferkatalysatoren gelöst enthält, bei 0 bis 50°C, vorzugsweise 10 bis 25°C, vermischen und dann die wäßrige Lösung eines Salzes des Diphenols der Formel (I) und die Dicarbonsäurehalogenide und/oder die Carbonylhalogenide innerhalb eines Zeitraums von 5 Minuten bis 5 Stunden, vorzugsweise 5 Minuten bis 2 Stunden bei 0 bis 50°C, vorzugsweise 10 bis 25°C, gegebenenfalls unter Rühren der Reaktionsmischung zufügen. Werden Dicarbonsäurehalogenide und Carbonylhalogenide nebeneinander eingesetzt, ist es vorteilhaft, zunächst Dicarbonsäurehalogenide und danach Carbonylhalogenid zuzufügen. Nach Zugabe des Carbonylhalogenids können gegebenenfalls Katalysatoren, beispielsweise tertiäre Amine, wie z.B. Triethylamin oder N-Ethylpiperidin, zugesetzt werden. Das Molekulargewicht des aromatischen Polyesters - im Sinne der oben gegebenen Definition - kann gegebenenfalls durch Zusatz eines Kettenabbrechers in bekannter Weise geregelt werden. Geeignete Kettenabbrecher sind beispielsweise Phenol und Phenole mit C₁-C₂₂-Alkylgruppen wie tert.-Butylphenol und p-Isooctylphenol. Als Säureakzeptoren können tertiäre Amine, Alkalihydroxide oder Erdalkalihydroxide, vorzugsweise Natriumhydroxid, verwendet werden.

Das Gewichtsverhältnis Diphenol der Formel I: Kautschuklatex beträgt 10:1 bis zu 1:40.

Das Gewichtsverhältnis Polyester:Kautschuk in den erfindungsgemäßen Interpolymerisaten ist 90:10 bis 5:95, vorzugsweise 90:10 bis 10:90.

Zur Isolierung der erfindungsgemäßen Interpolymerisate kann die organische Phase zunächst von der wäßrigen Phase abgetrennt, dann mit mineralischen Säuren, beispielsweise Phosphorsäure, oder organischen Säuren neutral und anschließend mit Wasser elektrolytfrei gewaschen werden. In manchen Fällen ist es vorteilhaft, die ganze Reaktionsmischung mit mineralischen Säuren oder organischen Säuren zu neutralisieren und erst anschließend die organische Phase abzutrennen und mit Wasser zu waschen. Aus der organischen Phase kann das Interpolymerisat beispielsweise durch Abdestillieren des organischen Lösungsmittels, durch Ausdampfen in entsprechenden Aggregaten oder durch Koagulation isoliert werden.

Die abgetrennte organische Phase kann beispielsweise zur Koagulation auch in organischen Flüssigkeiten mit geringer Löslichkeit für die Polyester unter Durchmischung eingetragen oder mit diesen versetzt werden. Als solche organische Flüssigkeiten werden bevorzugt aliphatische Kohlenwasserstoffe und deren Gemische wie Hexan, Heptan oder niedere aliphatische Alkohole wie Methanol, Ethanol, Isopropanol verwendet.

Nach Koagulation kann das Interpolymerisat beispielsweise durch Filtration oder Zentrifugieren abgetrennt und gegebenenfalls gewaschen werden, z.B. mit Wasser. Die erfindungsgemäßen Interpolymerisate eignen sich zur Herstellung von Formkörpern aller Art, z.B. Folien, Fasern und Spritzgußartikeln.

### Beispiele

1. Herstellung der Kautschuklatices
1.1. In einem Reaktor werden unter Stickstoff 1.030 Gew.-Teile Wasser und 5 Gew.-Teile Natriumsalz von C₁₄-C₁₈-Alkylsulfonsäuren vorgelegt und auf 70°C erhitzt. Hierzu fügt man eine Mischung aus 72 Gew.-Teilen n-Butylacrylat, 8 Gew.-Teilen p-Isopropenylphenylacetat (7,5 Mol-%) und 0,4 Gew.-Teilen 1,4-Butandioldiacrylat. Anschließend gibt man bei 70°C eine Lösung aus 3 Gew.-Teilen Kaliumperoxodisulfat und 60 Gew.-Teilen Wasser. Dann werden innerhalb 5 Stunden gleichmäßig zugefügt:

| | |
|---|---|
| Zulauf 1 | 828 Gew.-Teile n-Butylacrylat |
| | 92 Gew.-Teile p-Isopropenylphenylacetat (7,5 mol-%) |
| | 4,6 Gew.-Teile 1,4-Butandioldiacrylat |
| | |
| Zulauf 2 | 20 Gew.-Teile Natriumsalz von C₁₄-C₁₈-Alkylsulfonsäuren |
| | 700 Gew.-Teile Wasser |

Danach wird noch 4 Stunden bei 70°C gerührt. Der erhaltene Latex besitzt einen Feststoffgehalt von 36,3 Gew.-%. Der Gelgehalt des Polymerisats beträgt 92,0 Gew.-% (in Tetrahydrofuran gemessen). Der Latex wird mit Wasser auf einen Feststoffgehalt von 20 Gew.-% verdünnt und in den Beispielen eingesetzt.
1.2. Wie in Beispiel 1.1. wird ein Kautschuklatex hergestellt aus:
76 Gew.-Teilen n-Butylacrylat
4 Gew.-Teilen 2-Hydroxyethylmethacrylat (5 Mol-%)
0,4 Gew.-Teilen 1,4-Butandioldiacrylat

| | |
|---|---|
| Zulauf 1 | 874 Gew.-Teile n-Butylacrylat |
| | 46 Gew.-Teile 2-Hydroxyethylmethacrylat (5 Mol-%) |
| | 4,6 Gew.-Teile 1,4-Butandioldiacrylat |
| | |
| Zulauf 2 | 20 Gew.-Teile Natriumsalz von C₁₄-C₁₈-Alkylsulfonsäuren |
| | 700 Gew.-Teile Wasser |

Der erhaltene Latex besitzt einen Feststoffgehalt von 36,2 Gew.-%. Der Gelgehalt des Polymers beträgt 93,0 Gew.-% (in Tetrahydrofuran gemessen).
1.3. Wie bei Beispiel 1.1. wird ein Latex hergestellt aus:
80 Gew.-Teilen n-Butylacrylat
0,4 Gew.-Teilen 1,4-Butandioldiacrylat

| | |
|---|---|
| Zulauf 1 | 920 Gew.-Teile n-Butylacrylat |
| | 4,6 Gew.-Teile 1,4-Butandioldiacrylat |
| | |
| Zulauf 2 | 20 Gew.-Teile Natriumsalz von C₁₄-C₁₈-Alkylsulfonsäuren |
| | 700 Gew.-Teile Wasser |

Der erhaltene Latex besitzt einen Feststoffgehalt von 36,5 Gew.-%. Der Gelgehalt des Polymers beträgt 90,0 Gew.-% (in Tetrahydrofuran gemessen). Der Latex wird mit Wasser auf einen Feststoffgehalt von 20 Gew.-% verdünnt und in den folgenden Beispielen eingesetzt.
2. Herstellung der Interpolymerisate
2.1. 45 g des Latex gemäß Beispiel 1.1. mit einem Feststoffgehalt von 20 Gew.-% werden unter Durchmischung mit 450 g Methylenchlorid, die 0,645 g Tetrabutylammoniumbromid gelöst enthalten, versetzt. Unter ständiger Durchmischung werden gleichmäßig innerhalb von 15 Minuten zwei Zuläufe zugefügt:

| | | |
|---|---|---|
| Zulauf 1 | Lösung von | |
| | 22,83 g | (0,10 Mol) 2 ,2-Bis-(4-hydroxyphenyl)-propan (im weiteren Text Bisphenol A) |
| | 10,0 g | (0,25 Mol) Natriumhydroxid in |
| | 560 g | Wasser |
| | | |
| Zulauf 2 | Lösung von | |
| | 10,36 g | (0,051 Mol) Terephthaloylchlorid |
| | 10,36 g | (0,051 Mol) Isophthaloylchlorid in |
| | 50 g | Methylenchlorid |

Danach wird noch 1 Stunde gerührt und zur Aufarbeitung die wäßrige Phase abgetrennt. Die organische Phase wird mit verdünnter Phosphorsäure neutral und anschließend mit Wasser elektrolytfrei gewaschen. Durch Vermischen der organischen Phase mit Petrolether wird das Interpolymerisat gefällt und durch Filtration von den organischen Flüssigkeiten abgetrennt, mit Wasser gewaschen und getrocknet.
Menge an Polymerisat: 42,8 g
Gelgehalt (gemessen in Tetrahydrofuran): 26,4 Gew.-%
[η] der Solphase: 0,62
[η] Intrinsic-Viskosität, gemessen in Tetrahydrofuran bei 25°C

2.2. (Vergleich zu 2.1.)
Beispiel 2.1. wird wiederholt aber mit 45 g des Latex gemäß Beispiel 1.3. (20 Gew.-%).
Menge an Polymerisat: 43,0 g
Gelgehalt (gemessen in Tetrahydrofuran): 17,7 Gew.-%
[η] der Solphase: 0,65

2.3. Man verfährt wie in Beispiel 2.1., verwendet aber
120 g Kautschuklatex gemäß Beispiel 1.1. (Feststoffgehalt: 20 Gew.-%)
1450 g Methylenchlorid mit 0,645 g Tetrabutylammoniumbromid gelöst

| | |
|---|---|
| Zulauf 1 | wie in Beispiel 2.1. |
| Zulauf 2 | wie in Beispiel 2.1. |

Menge an Polymerisat: 57,5 g
Gelgehalt (gemessen in Tetrahydrofuran): 49,5 Gew.-%
[η] der Solphase: 0,47

2.4. (Vergleich zu 2.3.)
Man verfährt wie in Beispiel 2.1., verwendet aber 120 g des Kautschuklatex gemäß Beispiel 1.3. (20 Gew.-%).
Menge an Polymerisat: 58 g
Gelgehalt (gemessen in Tetrahydrofuran): 36,2 Gew.-%
[η] der Solphase: 0,52

2.5. Man verfährt wie in Beispiel 2.1., verwendet aber
90 g Kautschuklatex gemäß Beispiel 1.1. (Feststoffgehalt: 20 Gew.-%)
1200 g Methylenchlorid mit 0,645 g Tetrabutylammoniumbromid gelöst

| | |
|---|---|
| Zulauf 1 | Lösung von |
| | 11,42 g (0,050 Mol) Bisphenol A und |
| | 5,0 g (0,125 Mol) Natriumhydroxid in |
| | 280 g Wasser |
| | |
| Zulauf 2 | Lösung von |
| | 5,18 g (0,0255 Mol) Terephthaloylchlorid |
| | 5,18 g (0,0255 Mol) Isophthaloylchlorid in |
| | 35 g Methylenchlorid |

Menge an Polymerisat: 35,0 g
Gelgehalt (gemessen in Tetrahydrofuran): 56,5 Gew.-%
[η] der Solphase: 0,31

2.6. (Vergleich zu 2.5.):
Man verfährt wie in Beispiel 2.1. mit 90 g Kautschuklatex gemäß Beispiel 1.3.(20 Gew.-%).
Menge an Polymerisat: 35,2 g
Gelgehalt (gemessen in Tetrahydrofuran): 43,8 Gew.-%
[η] der Solphase: 0,36

2.7. 75 g des Kautschuklatex aus Beispiel 1.1. mit einem Feststoffgehalt von 20 Gew.-% werden zunächst mit einer Lösung aus:
22,83 g (0,10 Mol) Bisphenol A
10,0 g (0,25 Mol) Natriumhydroxid in
560 g Wasser
und anschließend mit 630 g Methylenchlorid durchmischt.
Anschließend wird unter ständiger Durchmischung eine Lösung aus:
10,36 g (0,051 Mol) Terephthaloylchlorid
10,36 g (0,051 Mol) Isophthaloylchlorid in
50 g Methylenchlorid
innerhalb von 15 Minuten zugefügt.

Danach wird noch 1 Stunde gerührt und wie in Beisiel 2.1. aufgearbeitet.
Menge an Polymerisat: 49,5 g
Gelgehalt (gemessen in Tetrahydrofuran): 36,9 Gew.-%
[η] der Solphase: 0,46

2.8. (Vergleich zu 2.7.):
Man verfährt wie in Beispiel 2.7. mit 75 g des Kautschuklatex gemäß Beispiel 1.3. (20 Gew.-%).
Menge an Polymerisat: 49,2 g
Gelgehalt (gemessen in Tetrahydrofuran): 26,6 Gew.-%
[η] der Solphase: 0,51

2.9. 18,0 g des Kautschuklatex gemäß Beispiel 1.2. mit einem Feststoffgehalt von 36,2 Gew.-% werden unter Durchmischung mit 450 g Methylenchlorid, die 0,645 g Tetrabutylammoniumbromid gelöst enthalten, versetzt. Anschließend wird eine Lösung aus:
0,52 g (2,6 mmol) Terephthaloylchlorid
0,52 g (2,6 mmol) Isophthaloylchlorid
15 g Methylenchlorid
zugegeben und die Reaktionsmischung 30 Minuten gerührt.
Dann werden unter ständiger Durchmischung gleichmäßig innerhalb von 15 Minuten zugefügt:

| | |
|---|---|
| Zulauf 1 | Lösung von |
| | 22,83 g (0,10 Mol) Bisphenol A und |
| | 10,0 g (0,25 Mol) Natriumhydroxid in |
| | 560 g Wasser |
| | |
| Zulauf 2 | Lösung von |
| | 9,84 g (48,4 mmol) Terephthaloylchlorid, |
| | 9,84 g (48,4 mmol) Isophthaloylchlorid in |
| | 50 g Methylenchlorid |

Danach wird noch 1 Stunde gerührt und wie in Beispiel 2.1. aufgearbeitet.
Menge an Polymerisat: 41,8 g
Gelgehalt (gemessen in Tetrahydrofuran): 20,7 Gew.-%
[η] der Solphase: 0,48

2.10. (Vergleich zu 2.9.):
Man verfährt wie in Beispiel 2.9. mit 18,0 g des Kautschuklatex gemäß Beispiel 1.3. mit einem Feststoffgehalt von 36,5 Gew.-%.
Menge an Polymerisat: 42,0 g
Gelgehalt (gemessen in Tetrahydrofuran): 14,2 Gew.-%
[η] der Solphase: 0,54

2.11. 29 g Kautschuklatex gemäß Beispiel 1.1. mit einem Feststoffgehalt von 20 Gew.-% werden mit einer Lösung aus:
22,83 g (0,10 Mol) Bisphenol A,
24,0 g (0,60 Mol) Natriumhydroxid in
250 g Wasser
durchmischt.
Anschließend werden 250 g Methylenchlorid, die 0,965 g Tetrabutylammoniumbromid gelöst enthalten, unter Durchmischen zugegeben. Dann werden 19,8 g (0,20 Mol) Phosgen eingeleitet und noch 25 Minuten gerührt. Aufarbeitung wie in Beispiel 2.1.
Menge an Polymerisat: 30,0 g
Gelgehalt (gemessen in Tetrahydrofuran): 24,2 Gew.-%
[η] der Solphase: 0,32

2.12. (Vergleich zu 2.11.):
Man verfährt wie in Beispiel 2.11. mit 29 g des Kautschuklatex gemäß Beispiel 1.3. (20 Gew.-%).
Menge an Polymerisat: 30,4 g
Gelgehalt (gemessen in Tetrahydrofuran): 16,7 Gew.-%
[η] der Solphase: 0,37

**Tabelle 1:**

| Vergleich der berechneten Gelgehalte mit den experimentell gefundenen Gelgehalten der Polymerisate Beispiele 2.1 - 2.12. | | | |
|---|---|---|---|
| Beispiele | berechneter Gelgehalt in Gew.-%²⁾ | experimentell gefundener Gelgehalt in Gew.-%¹⁾ | Anteil des aromatischen Polyesters im Interpolymerisat in Gew.-% |
| 2.1. | 18,4 | 26,4 | 30,3 |
| 2.2.* | 18,0 | 17,7 | 0 |
| | | | |
| 2.3. | 36,8 | 49,5 | 25,7 |
| 2.4.* | 36,0 | 36,2 | 0 |
| | | | |
| 2.5. | 46,0 | 56,5 | 18,4 |
| 2.6. * | 45,0 | 43,8 | 0 |
| | | | |
| 2.7. | 27,6 | 36,9 | 25,2 |
| 2.8. * | 27,0 | 26,6 | 0 |
| | | | |
| 2.9. | 14,2 | 20,7 | 31,4 |
| 2.10. * | 13,8 | 14,2 | 0 |
| | | | |
| 2.11. | 17,1 | 24,2 | 29,3 |
| 2.12.* | 16,8 | 16,7 | 0 |

| | | | |
|---|---|---|---|
| *Vergleichsbeispiel | | | |
| 1. Die Gelgehalte werden nach M. Hoffmann et al., Polymeranalytik I und II, Georg Thieme Verlag, Stuttgart (1977) bestimmt. | | | |
| 2. Die berechneten Gelgehalte der Endprodukte ergeben sich aus den experimentell ermittelten Gelgehalten der Kautschuke multipliziert mit den Gewichtsanteilen des Kautschuks im Endprodukt. | | | |

Bei Einsatz des Kautschuks gemäß Beispiel 1.3. entsprechen die berechneten Gelgehalte den experimentell gefundenen (siehe Vergleichsbeispiele 2.2., 2.4., 2.6., 2.8., 2.10. und 2.12.). Bei Verwendung der Kautschuke gemäß Beispiel 1.1. und 1.2. sind dagegen die experimentell gefundenen Gelgehalte immer größer als die berechneten, d.h. eine vollständige Auftrennung in die Komponenten ist nicht mehr möglich (siehe Beispiele 2.1., 2.3., 2.5., 2.7., 2.9. und 2.11.). Dieses bedeutet, daß eine teilweise chemische Verknüpfung zwischen Polyester und Kautschuk eingetreten ist, d.h. sich ein Interpolymerisat gebildet hat.

## Patentansprüche

1. Verfahren zur Herstellung von Interpolymerisaten aus aromatischen Polyestern, aromatischen Polycarbonaten oder aromatischen Polyestercarbonaten und vernetzten Kautschuken, dadurch gekennzeichnet, daß man ein Gemisch eines reaktive Gruppen enthaltenden vernetzten Kautschuks in Form eines wäßrigen Latex mit einem mittleren Teilchendurchmesser (d₅₀) von 0,005 bis 1,5 µm und einem Gelgehalt > 85 Gew.-% und einer wäßrigen Lösung eines Alkali- oder Erdalkalidiphenolats mit einer Lösung eines Dicarbonsäurehalogenids und/oder eines Carbonylhalogenids in einem mit Wasser nicht mischbaren Lösungsmittel umsetzt, wobei der Kautschuk solche reaktiven Gruppen enthält, welche mit den aromatischen Polyestern, aromatischen Polycarbonaten oder aromatischen Polyestercarbonaten bei deren Bildung reagieren können, so daß sich an der Phasengrenze Wasser/organisches Lösungsmittel ein aromatischer Polyester bzw. ein aromatisches Polycarbonat oder Polyestercarbonat bildet, der (das) gleichzeitig mit dem Kautschuk unter Bildung des Interpolymerisates in die organische Phase übergeht.

2. Verfahren nach Anspruch 1, dadurch gekennzeichnet, daß man als vernetzte Kautschuke Dienkautschuke und/oder Acrylatkautschuke und/oder Silikonkautschuke und/oder Olefinkautschuke in Latexform mit reaktiven Gruppen X = OH: -CH₂-Hal (Hal = Halogen), 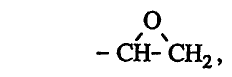 -COOH; -CO-Hal (Hal = Halogen) und/oder 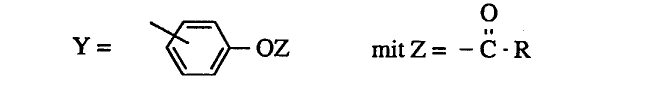 oder 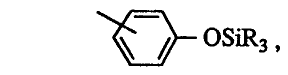 worin R = C₁-C₄-Alkyl,
einsetzt.

3. Verfahren nach Anspruch 1, dadurch gekennzeichnet, daß man Diphenole der Formel 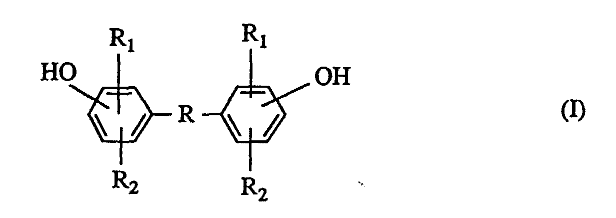 mit R₁, R₂ = H, C₁-C₄-Alkyl, Halogen,
R = Einfachbindung, C₁-C₁₂-Alkylen, C₅-C₂₀-Cycloalkylen, Arylen, 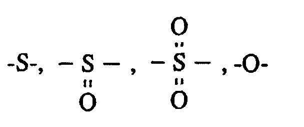 einsetzt.

4. Verfahren nach Anspruch 1, dadurch gekennzeichnet, daß das Gewichtsverhältnis Diphenol:Kautschuklatex von 10:1 bis zu 1:40 beträgt.

5. Interpolymerisat, das a) einen aromatischen Polyester oder ein aromatisches Polycarbonat oder ein aromatisches Polyestercarbonat und b) einen vernetzten Kautschuk im Gewichtsverhältnis 90:10 bis 5:95 enthält und in welchem beide Bestandteile chemisch miteinander verbunden sind, erhältlich nach einem oder mehreren der Ansprüche 1 bis 4.

## Claims

1. Process for the production of interpolymers from aromatic polyesters, aromatic polycarbonates or aromatic polyester carbonates and crosslinked rubbers, characterised in that a mixture of a crosslinked rubber containing reactive groups in the form of an aqueous latex having an average particle diameter (d₅₀) of 0.005 to 1.5 µm and a gel content of >85 wt.% and an aqueous solution of an alkali metal or alkaline earth metal phenolate is reacted with a solution of a dicarboxylic acid halide and/or a carbonyl halide in a water-immiscible solvent, wherein the rubber contains reactive groups of a type which may react with the aromatic polyesters, aromatic polycarbonates or aromatic polyester carbonates during the formation thereof, such that an aromatic polyester or an aromatic polycarbonate or polyester carbonate forms at the water/organic solvent phase interface, which polymer passes simultaneously with the rubber into the organic phase to form the interpolymer.

2. Process according to claim 1, characterised in that the crosslinked rubbers used are diene rubbers and/or acrylate rubbers and/or silicone rubbers and/or olefin rubbers in latex form with reactive groups X = OH; -CH₂-Hal (Hal = halogen) and/or 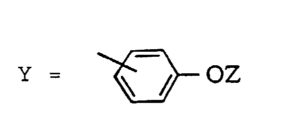 where 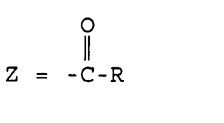 or 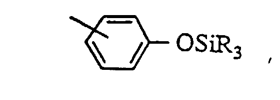 in which R = C₁-C₄ alkyl.

3. Process according to claim 1, characterised in that diphenols of the formula 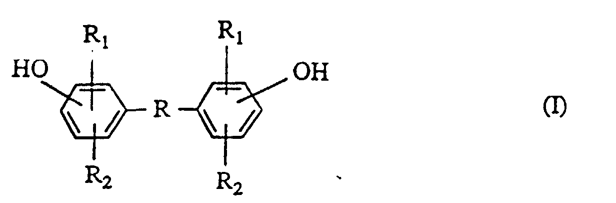 where R₁, R₂ = H, C₁-C₄ alkyl, halogen,
R = single bond, C₁-C₁₂ alkylene, C₅-C₂₀ cycloalkylene, arylene, 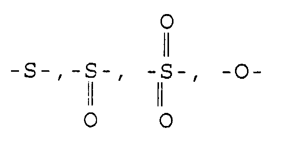 are used.

4. Process according to claim 1, characterised in that the diphenol:rubber latex weight ratio is from 10:1 to 1:40.

5. Interpolymer which contains a) an aromatic polyester or an aromatic polycarbonate or an aromatic polyester carbonate and b) a crosslinked rubber in a weight ratio of 90:10 to 5:95 and in which both constituents are chemically bonded together, obtainable according to one or more of claims 1 to 4.

## Revendications

1. Procédé pour la préparation d'interpolymères de polyesters aromatiques, polycarbonates aromatiques ou polyesters-carbonates aromatiques et de caoutchoucs réticulés, caractérisé en ce que l'on fait réagir un mélange d'un caoutchouc réticulé, portant des groupes réactifs, à l'état de latex aqueux à une dimension de particule moyenne (d₅₀) de 0,005 à 1,5 µm et une teneur en gel supérieure à 85 % en poids et une solution aqueuse d'un diphénolate alcalin ou alcalino-terreux avec une solution d'un halogénure d'acide dicarboxylique et/ou d'un halogénure de carbonyle dans un solvant non miscible à l'eau, le caoutchouc portant des groupes réactifs capables de réagir avec les polyesters aromatiques, les polycarbonates aromatiques ou les polyesters-carbonates aromatiques lors de leur formation, de sorte qu'il se forme à l'interface de phases eau/solvant organique respectivement un polyester aromatique ou polycarbonate aromatique ou polyester-carbonate aromatique qui passe dans la phase organique en même temps que le caoutchouc, avec formation de l'interpolymère.

2. Procédé selon la revendication 1, caractérisé en ce que l'on utilise en tant que caoutchoucs réticulés des caoutchoucs diéniques et/ou des caoutchoucs d'acrylates et/ou des caoutchoucs de silicones et/ou des caoutchoucs d'oléfines à l'état de latex, portant des groupes réactifs X = OH ; -CH₂-Hal (Hal = halogène), 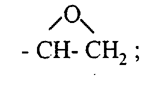 -COOH; -CO-Hal (Hal = halogène) et/ou 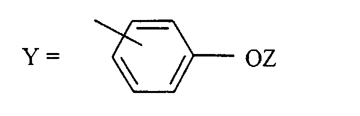 avec 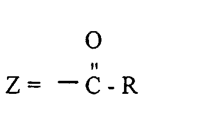 ou 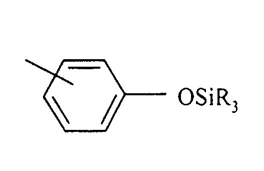 avec R = alkyle en C₁-C₄,

3. Procédé selon la revendication 1, caractérisé en ce que l'on utilise des diphénols de formule 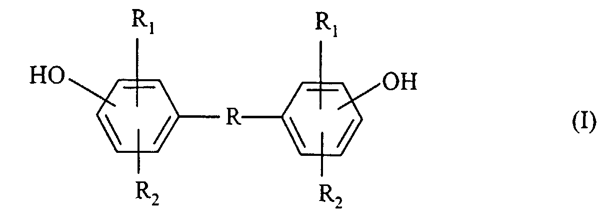 dans laquelle R₁, R₂ = H, alkyle en C₁-C₄, halogène,
R = liaison simple, alkylène en C₁-C₁₂, cycloalkylène en C₅-C₂₀, arylène,

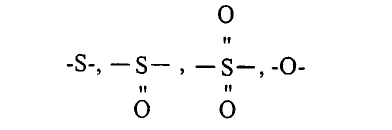

4. Procédé selon la revendication 1, caractérisé en ce que les proportions relatives en poids diphénol/latex de caoutchouc vont de 10:1 à 1:40.

5. Interpolymère contenant a) un polyester aromatique ou un polycarbonate aromatique ou un polyester-carbonate aromatique et b) un caoutchouc réticulé dans des proportions relatives en poids de 90:10 à 5:95 et dans lequel les deux constituants sont liés chimiquement entre eux, obtenu selon une ou plusieurs des revendications 1 à 4.
